# EUROPEAN PATENT SPECIFICATION

(11) **EP 2 826 357 B1**
(45) Date of publication and mention of the grant of the patent: **19.04.2017**
(21) Application number: 13003658.5
(22) Date of filing: 20.07.2013
(51) Int. Cl.: A01D 45/16

(54) **Machine for cutting off tobacco leaves with stem holding for eastern type plants, for harvesting and collecting the leaves in collection mesh baskets with pneumatic conveying**
Maschine zum Abschneiden von Tabakblättern mit Stammhalterung für Pflanzen des östlichen Typs zum Ernten, Schichten und Sammeln der Blätter in Sammeldrahtkörben mit pneumatischer Beförderung
Machine pour couper des feuilles de tabac avec maintien de tige pour la récolte de plantes de type oriental, stratification et collecte des feuilles dans des paniers en maille avec transport pneumatique

(43) Date of publication of application: 21.01.2015
(73) Proprietor: V.I.T. S.A. Processing Equipment, 570 22 Thessaloniki (GR)
(72) Inventor: Tsikis, Stefanos, 551 32 Thessaloniki (GR)
(74) Representative: Bakatselou, Vassiliki

(56) References cited:
- EP-A1- 0 951 817
- EP-A1- 2 687 082
- US-A- 3 654 753
- US-A- 3 892 061
- US-A- 4 285 189
- US-B1- 6 185 921

## Description

### FIELD OF THE INVENTION

The invention relates to a machine for cutting off tobacco leaves from the plant in the field, with simultaneous holding of the stem of the plant during the cutting off, harvesting, and collecting the eastern type tobacco leaves in a mesh basket.

### DESCRIPTION OF PRIOR ART

The tobacco plants are divided into two great categories:
- Broadleaf such as Virginia, Burley, etc.
- Eastern such as Basma, Katerini, Izmir, Samsun, Prilep, Yaka, etc.

Until today, the cutting off and harvesting of the leaves of broadleaf tobacco plants that grow to big height with a thick stem, has been performed either by hand or with the use of machines.

The machines are self-propelled with drivers. The machines are driven between the rows of plants, so that the plants are found between rotating fins that cut the leaves at the petiole. The stem of such tobacco plants is resistant, can endure the strain the machine causes it during the cutting off and there is no need for stem holding during the machine's movement, there is only a need for a "driver" for aligning the plants.

The cutting off mechanism comprises rotating plastic fins or metallic knives. The cut off leaves are conveyed with the use of rollers and belts into baskets located on the upper part of the machine. The leaves are large in size, larger than 15x25 centimetres and because of their large surface are easily conveyed to the mesh collection container. Subsequently, the collected leaves are placed in mesh containers which comprise integrated side needles for the holding of the leaves. The filled containers are placed in kilns for artificial drying ("curing") of leaves, a practice applied for the Virginia variety. For the variety Burley as well as Virginia, natural curing may also take place. The leaves are sewn in bunches manually or with the use of stapling machines and hung to dry naturally.

On the contrary, the eastern type tobacco plants grow to be smaller in height and their stem is thin and fragile, so that the broadleaf tobacco machines cannot be used and the cutting off and harvesting of leaves is performed mainly by hand, whereupon the worker "breaks", cuts off the leaves from the stem and gathers them.

This procedure is particularly time consuming and requires large manpower, since the leaf gathering speed of a single person is a given.

Concurrently, this procedure currently takes place during the early morning hours of the day during the summer, when the leaves are matured and the morning dew assists the leaves in being cut off (broken from the stem) more easily.

Subsequently the hand-gathered leaves are assembled using a twine with the aid of a needle, thus creating a bunch. The bunch is hung beneath a plastic tent to dry.

Apart from the manual method for cutting off the leaves in eastern type tobacco plants, a machine is also available today, used for cutting off and collecting the leaves in eastern type tobacco plants.

This particular machine, which is described in the document EP 2 687 082 falling within the terms of Article 54(3) EPC, has a mechanism for holding the stem during the cutting off. The cutting off is performed with rotating plastic fins, rectilinear or of some other form. The leaves are conveyed with the use of conveyor belts and rollers.

The document US-A-4 285 189 discloses a tobacco harverster comprising a conveyer made as two horizontal endless chains, a leaf stripper located under said conveyer and having a device for adjusting its position both horizontally and vertically and being made as augers having blades mounted on shaft and brushes mounted on said shaft between the blades, cantilevered drums provided with brushes, inclined conveyor adapted to transfer the leaves to a receptacle bin and a self-propelled chassis, drums and conveyors for feeding severed leaves to the conveyor and is designed for picking up the leaves of the grade Virginia Tobacco.

The document US-A-3 892 061 relates to a defoliator mechanism for removing the leaves from tobacco plants. It comprises a pair of adjacently disposed defoliating members, each comprising a shaft parallel to the sense of moving of the defoliator and defoliator member extending generally parallel to the shaft, conveyor belts such as pneumatic type devices extending below defoliating members, deflectors mounted below defoliating members to prevent the leaves from falling between the conveyor belts and directing the leaves to said conveyor belts.

The document EP-A-0 951 817 has as its object a tobacco harvesting machine having a device for severing ripe tobacco leaves from tobacco stems, said device comprising guide means consisting of a pair of belts located on both sides of the direction, a severing device for severing the leaves comprising at least one rotary cylinder which has on its outer surface a diagonally extending wide stripper edge, twin belts for transporting upwards severed tobacco leaves on both sides to the direction of travel, a circular brush, located below each rotary cylinder, a rotary cylinder in contact with the circular brush and which rotates so as to move the leaves to the input of a conveyor belt system, and a storage receptacle located at the output of said system.

The document US-A-3 654 753 relates to a tobacco harvesting machine for cutting tobacco leaves from the stalk of the tobacco plant, comprising a self-propelled frame, a harvesting cutter device, means for adjusting the level of the latter, a first pair of conveyor belts driven at a speed equal to the forward movement of the harvesting device to hold the stalk in a vertical position, a second pair of conveyors mounted at the lower ends of the shafts in parallel relationship with respect to the first pair of conveyor and cutter blade, means for providing an upwardly directed air draft to position the leaves in a upwardly directed location about the stalk prior the cutting and porous conveyor belts each forming a space containing a fan and motor assembly operable to create a draft to suck the leaves discharged from the first conveyor belts and a pair of storage containers.

### TECHNICAL PROBLEM SOLVED BY THE INVENTION

The design of these machines used up to now, presents at least one of the following shortcomings:
A) Geometry difficulties concerning the harvesting of the leaves located at the base of the stem. The leaves that must be cut off and harvested from the plant, start at the base of the stem at ground level. The head on which the existing system for cutting off and harvesting the leaves is borne is capable of harvesting leaves from the plant's stem at a minimum height of 20-25cm above the ground. This is due to the conveyor belt which is located underneath the mechanism for cutting off leaves. The cutting off mechanism can not approach closer to the ground because there is the conveyor belt interposed between them.
   Concurrently, due to the irregularity which the soil surface of the field usually presents, the collection belt touches the ground, with the result that soil is inserted into the conveyor belt, even if the latter is well covered, which creates a mechanical problem.
   The soil accumulates inside the conveyor belt; it penetrates between the rollers and the belt, as well as into the roller bearings. This has the result that the belt transporting the cut leaves can no longer move at the required speed, or is blocked. This causes wear of components and therefore more frequent maintenance is required.
B) Difficulties regarding cutting off the plant leaves located near the stem base, because of the large size and density of the leaves. The leaves cutting off device comprises plastic fins rectilinear and of inverted U-shape, and is limited to cutting off small leaves only. It causes damages to larger leaves. Damaged leaves constitute a problem during the drying ("curing") phase; they cannot dry hung in bunches, because they break and fall.
C) The leaves which are situated close to the ground and cannot be collected mechanically, for the above-mentioned reasons (subsection A, B), must be collected with the conventional method, that is, manually.

It is therefore impossible, using these machines, to automate all stages of the cutting off procedure. For the manual collecting of the leaves situated near the stem base, many workers are still required. This results in maintaining a relatively high collection cost, as well as a long overall collection time.

### OBJECT AND DESCRIPTION OF THE INVENTION

The object of the present invention is to minimise the man-hours, to reduce the harvesting time and thus the cost of the harvesting of tobacco leaves for eastern type plants.

A further object of the present invention is to reduce the production losses regarding the leaf losses during harvesting and also the damaged or destroyed leaves.

These objectives are solved by the machine for cutting off tobacco leaves according to claim 1.

### DISCLOSURE OF THE INVENTION

Namely, the present invention concerns: the cutting off of the tobacco leaves from the stem of the plant via mechanical means, while simultaneously holding the stem; the collection of leaves, and positioning the leaves into a mesh basket, ready for drying, with the minimum possible losses.

The cutting off of the leaves from the plant is done with the use of rotating fins which thrash the plant at the petiole, at the point where the leaf is connected to the stem. The plant's stem is not strong enough to take the blow and so its holding is imperative in order to prevent hurting and breaking the stem. Otherwise, without stem holding, the plant gives way during the fin rotation and is hurt or destroyed.

The cut off leaves, upon falling, are driven on a conveyor belt with the assistance of a rotating shaft equipped with lengthwise elastic fins. The fins with their rotation drive the leaves towards the inlet port of the transfer conduit. This conduit conveys the leaves towards the basket by means of air produced by a blower situated in front of and above the cutting off mechanism. The power of the generated air, creating suction at the inlet port of the leaves, pulls the leaves into the conduit, and then pushes them towards the output, where the leaves are collected in a mesh basket. This way the flow of air produced is used to input the leaves to the transfer conduit and also to drive them in the baskets.

The present invention is mounted on an automotive vehicle, which is conducted by a driver. The driver is seated at the front of the vehicle, driving it among the rows of plants. The vehicle is moved with the use of an internal combustion engine or an accumulator battery or a generator. The means of motion of the vehicle also provide the energy required for driving the machine, for the rotation of the cutting off mechanisms, for the adjustment of cutting-off height, of holding belts and of pneumatic conveying.

The mechanisms for holding, cutting off and collecting may be energy supplied by:
1. The vehicle on which they are mounted or
2. An agricultural tractor with wheels of big diameter, so that the tractor moves above the height of the plants.

In order to support the plant during the cutting off procedure, the stem of the plant is held in place with the use of four belts, which move at precisely the same speed as the vehicle. The accuracy of synchronisation of the speed of the belts holding the plant's stem, with the speed of the vehicle, is necessary in order to hold the stem of the plant in an upright position. Thus, the held plant is not wounded and the leaves are cut off from the stem.

The cutting off and harvesting mechanism comprises five systems:
A) A system for holding the plant's stem during the cutting off of the leaves.
B) A system for opening up the leaves from the stem.
C) A system for cutting off the leaves.
D) A mechanism for collecting the cut off leaves.
E) A system for adjusting the cutting-off height and the parallelism between cutting off level and the ground.

The collecting and conveyance of the cut off leaves is realised with the combination of the following parts:
Two rotating shafts with elastic fins parallel to the ground and turning on both sides of the plant prevent the cut off leaves from falling on the ground and drive them to the left and right side of the plant.

Two transfer conduits adjacent to the shafts and on both sides of the plant convey the leaves.

The above systems are mounted on a base capable of moving in the vertical axis to allow the adjustment of the cutting height.

The elevation of the base is performed hydraulically using hydraulic cylinders which move the cantilevers on which the bases are suspended upwards or downwards.

The mesh leaf collection baskets are placed manually at the outlet of the transfer conduit. It is possible to use either two small cylindrical baskets, one on the outlet of each transfer conduit, or a large one, wherein the leaves from both conduits are collected.

These baskets are made of plastic or metallic mesh. When the collection baskets are filled, a worker replaces in the machine the filled baskets with empty ones. Thereafter the filled baskets are transported manually or by means of a vehicle in the drying space (tents) for leaf drying. In the case where two small baskets are used, they are placed manually in a horizontal position below the plastic tents, so that the leaves are hanging, that is, they are perpendicular to the ground. In case where a single central basket is used, the leaves are evacuated, and they are assembled using a twine with the aid of a needle, thus creating bunches.

### DESCRIPTION OF AN EMBODIMENT OF THE INVENTION WITH REGARD TO THE DRAWINGS

### More analytically:

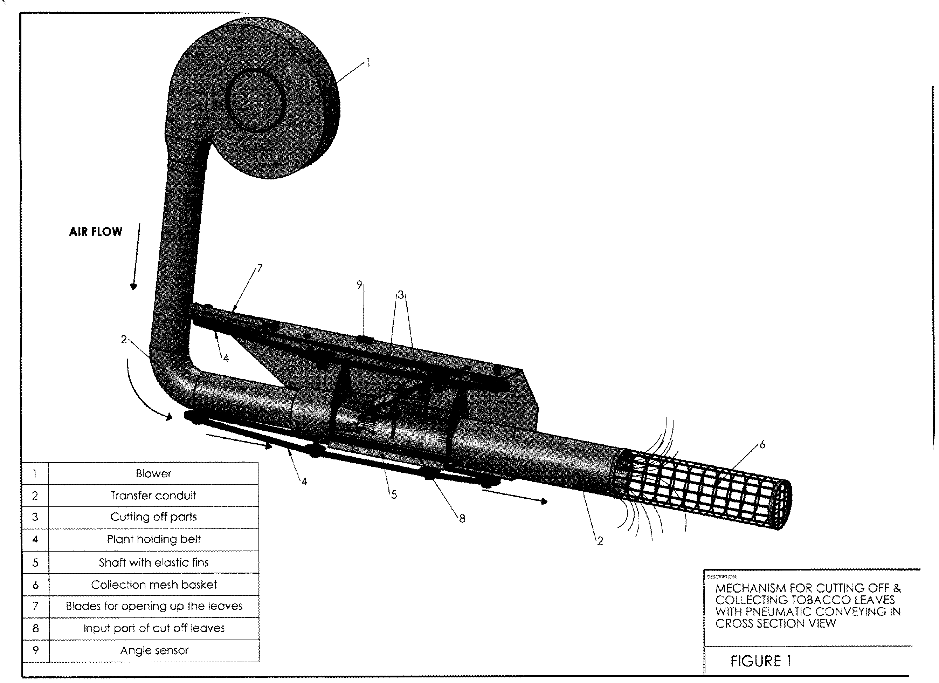

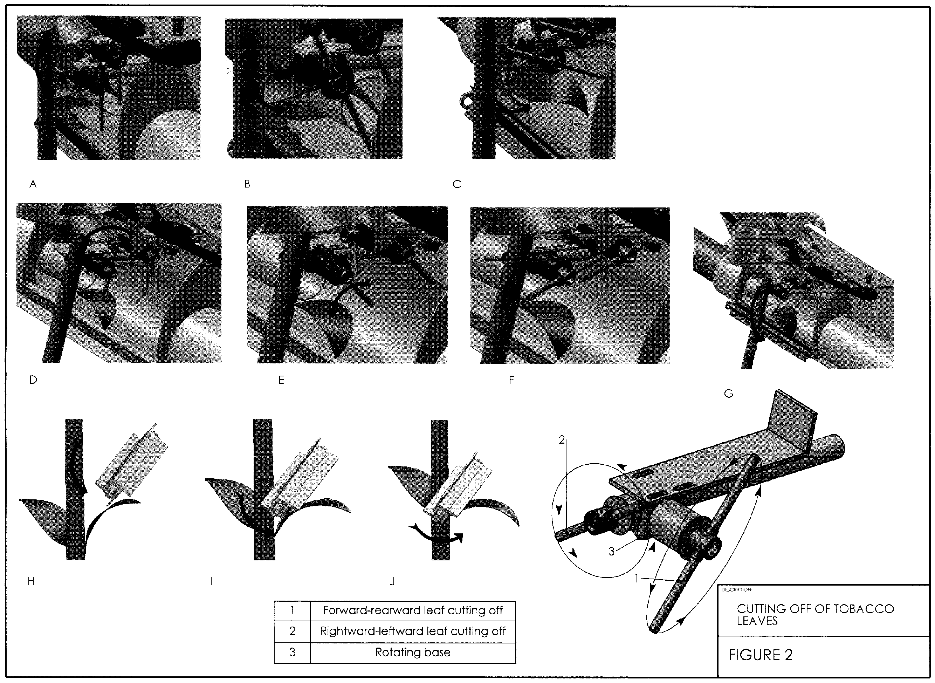

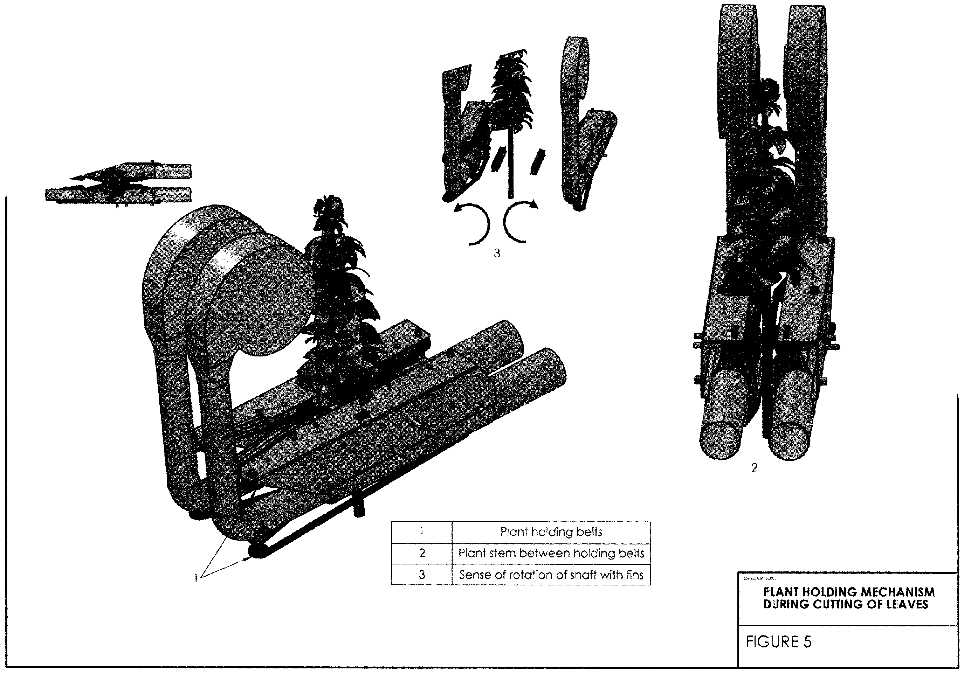

A) The holding of the plant's stem is achieved with the assistance of four belts, two on each side, (figure 1.4, figure 4.4 and figure 3.4) which move on the same plane and enfold the stem of the plant, stabilising it during the cutting off of the leaves.
   The plane of the belts is parallel to the ground and perpendicular to the stem of the plant.
   The plants are planted in rows in the field. With the machine's movement, the plant holding belts are also moved at precisely the same velocity as that of the machine. Thus by enfolding the stem of the plant, said stem remains stationary, during the machine's movement (figure 5.2).
B) The opening up of the leaves is accomplished by means of blades placed on a rotating shaft (figure 1.7).
   By moving the vehicle parallel to the rows of plants, this shaft is placed between the stem of the plant and the leaf, forcing by its rotation the leaf to increase its angle with the stem of the plant (figure 2.H-J).
C) For the cutting off of the leaves from the stem, rectilinear flexible parts cut off the leaves ahead of and behind the stem (figure 2.1, figure 2.D-G) and corresponding rectilinear flexible parts, placed in a perpendicular arrangement with respect to the former ones, cut off the leaves at the sides, right and left of the plant (figure 2.2, figure 2A-C). These parts are made of nonstick plastic rod of circular cross section; they are located at the entrance of the inlet port (figure 1.8) into the pneumatic transfer conduit.
D) The harvesting mechanism comprises:
   Shafts with elastic fins (figure 1.5) on each side of the stem of the plant (figure 5.3).

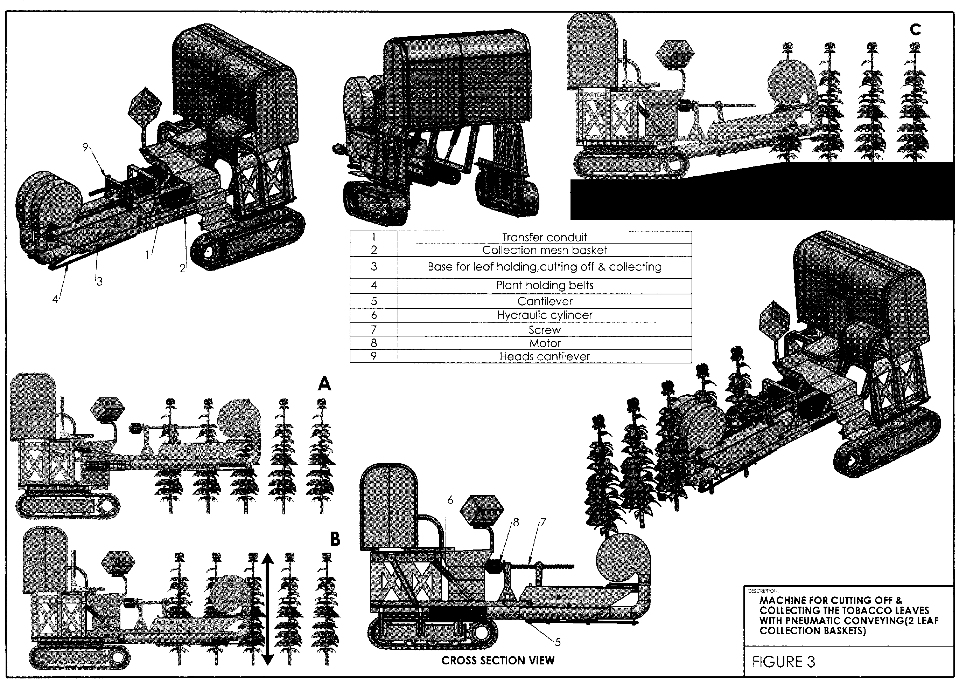

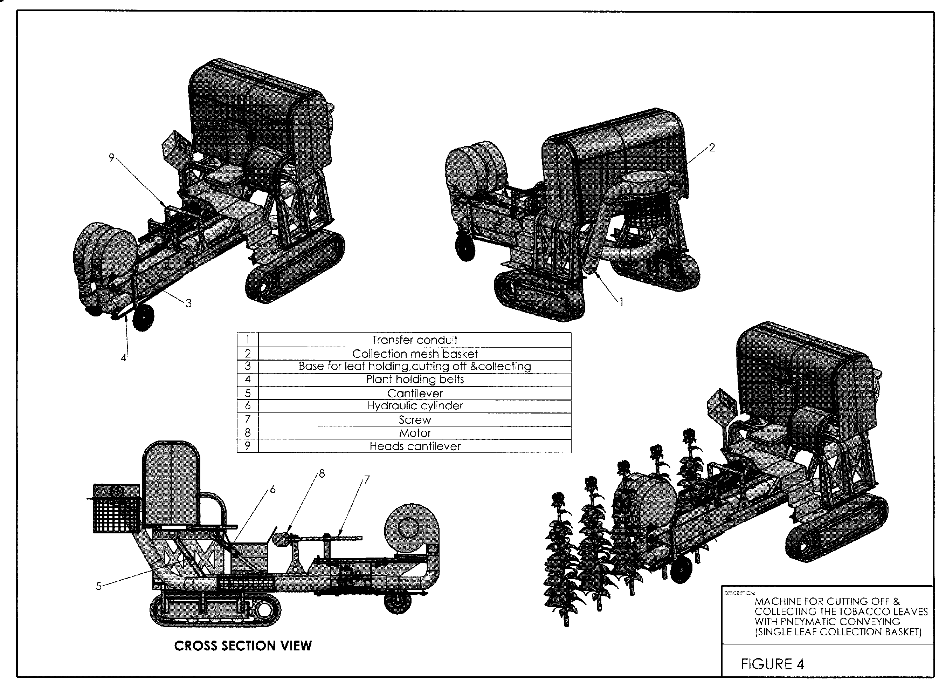

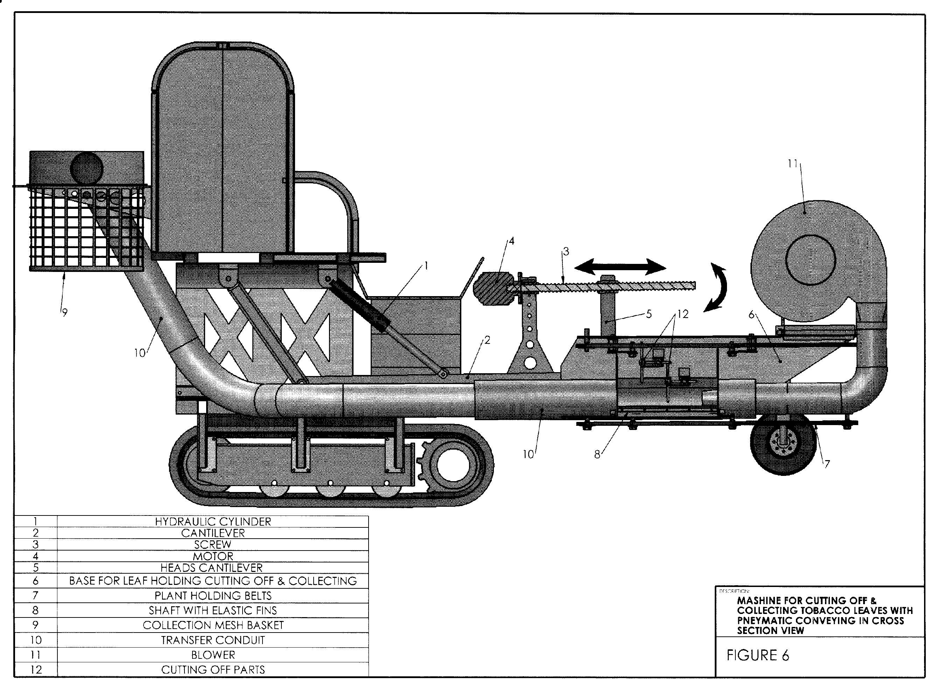

   Beneath the leaf cutting parts there are two shafts with lengthwise fins covering the length of the leaf inlet ports (figure 1.8) into the pneumatic transfer conduits (figure 1.2, figure 3.1, figure 4.1).
   The cut off leaves fall beneath the fins. To prevent them from falling on the ground, the two finned shafts rotate one clockwise and one counterclockwise (figure 5.3), pushing the leaves towards the ports of transfer conduits (figure 1.8). There due to the suction, the leaves are directed into the conduits and are conveyed through them towards the collection mesh baskets (figure 1.6, figure 3.2 and figure 4.2). The suction is created by the air produced by the blower, which is located on the vehicle, and said air is directed into the conduit. Due to the movement of the air and the appropriate configuration of the inlet port, suction is created, which pulls the leaves inside the conduit. Thereafter the air pushes the leaves into the baskets.
   The collection of the leaves takes place in mesh baskets (figure 1.6, figure 4.2 and figure 3.2) suspended at the end of pneumatic transport conduits (figure 1.2).
   The collection mesh baskets (figure 1.6, figure 4.2, figure 3.2) are made of plastic or metallic mesh, of circular cross section, and can be dismantled to reduce the volume of empty baskets during transport and storage. It is possible to use either two small baskets (figure 3.2), one on the outlet of each transfer conduit, or a large one, wherein the 2 transfer conduits end (figure 4.2).
   In the former case, when two collection baskets are used, when these are filled, they are removed from the vehicle and placed, full of leaves, under the tents in order to dry.
   In the latter case, a central basket is used. The leaves are evacuated from it, they are assembled using a twine with the aid of a stapling machine and they are put to dry in the form of bunches.
E) The base (figure 1, figure 3.3, figure 4.3, figure 6.6) on which the systems for holding the plant, and for cutting off and collecting the leaves, are mounted, is located on the vehicle (figure 3, figure 4) and is capable of moving in the vertical axis (figure 3.A-B) to allow the adjustment of the desired leaf cutting off height. It is also capable of changing the inclination from -15 ° to +15 ° degrees, so that the base remains parallel to the ground when the vehicle passes across an unevenness of the ground.

This movement of the base is performed using hydraulic cylinders (figure 3.6, figure 4.6, figure 6.1) which move upwards or downwards the cantilevers (figure 3.5, figure 4.5, figure 6.2) holding the bases. An electronic angle-measuring sensor detects the change in inclination of the base, and restores it, so that the base with all carried systems is always parallel to the ground. This manner of base suspension creates essentially an articulation, allowing it to pass over unevennesses of the ground, without being affected by the position of the rest of the collection machine. So the cutting off is always performed with the plant held by the belts in a position vertical to them, and with the cutting off height remaining constant all over the field, without being affected by ground unevennesses.

This base may be a single one for the collection of leaves at a single row in the field, or multiple for increased capacity.

Such systems may be one or two or even more in order to harvest leaves from one, two or more rows of plants.

## Claims

1. Machine for cutting off tobacco leaves with stem holding for eastern type plants for harvesting and collecting the leaves in collection mesh baskets with pneumatic conveying, comprising:
a mechanism for the adjustment of cutting-off height and the parallelism between cutting off level and the ground (figure 3.5, 3.6, 3.7);
rotating shafts with elastic fins which open up the leaves, facilitating their cutting off (figure 2.H-J);
a cutting off mechanism comprising a rotating shaft with flexible rectilinear plastic parts with the same cutting sense as the sense of motion of the vehicle, as well as with flexible rectilinear plastic parts with a cutting sense perpendicular to the sense of motion of the vehicle (figure .3, figure 2);
rotating shafts (figure 1.5, figure 5.3) with elastic fins directing the leaves to the pneumatic transfer conduits;
pneumatic transfer conduits, directing the cut off leaves to the collection baskets (figure 1.2, figure 3.1, figure 4.1);
mesh baskets, wherein the cut off leaves are collected (figure 1.6, figure 3.2, figure 4.2);
a vehicle on which these mechanisms are mounted and which provides the energy to move and function the parts of the machine (figure 3, figure 4),
a mechanism for holding the stem of the plant during the cutting off of the leaves comprising four horizontal belts, two on each side.

2. Machine for cutting off tobacco leaves according to Claim 1, **characterised by** the mechanism for the adjustment of cutting-off height and the parallelism between cutting off level and the ground comprising:
A) hydraulic cylinders (figure 3.6, 4.6, 6.1) which move upwards or downwards the cantilevers (figure 3.5, 4.5, 6.2) on which are posed the bases (figure 3.3, 4.3, 6.6) carrying the said mechanisms, and thereby adjusting the cutting off height;
B) an angle sensor (figure 1.9) mounted on one of the bases, which detects the change of inclination of the bases;
C) a motor (figure 3.8, 4.8, 6.4) which receives instructions from the sensor in order to rotate the screw (figure 3.7, 4.7, 6.3) which is hinged to a cantilever (figure 3.9, 4.9, 6.5) at the top of the bases; this appropriate screw rotation moves the cantilever, modifying the inclination of the bases maintaining them always parallel to the ground;

3. Machine for cutting off tobacco leaves according to claim 1 or claim 2 **characterised by** the mechanical collection of the cut off leaves and their transfer to the collection baskets, which is conduced by means of a mechanism, consisting of two rotating shafts with elastic fins, which are under the cutting off device and on either side of the trunk of the plant and drive the cut off leaves to the inlet port (figure 1.8) of the pneumatic transfer conduits (figure 1.2, figure 3.1, figure 4.1);
the mechanism of Claim 3 is also **characterised by** two pneumatic transfer conduits, which drive the leaves to the collection baskets (figure 1.6, figure 3.2, figure 4.2); this is accomplished by the force of the air produced by a blower (figure 1.1) which is placed at the start of each transfer conduit and creates suction at the leaf inlet port (figure 1.8), pulling the cut off leaves within the conduit and then pushing them towards the baskets;

4. Machine for cutting off tobacco leaves according to anyone of claims 1 to 3, **characterised by** the collection of the cut off leaves into mesh collection baskets mounted on the output of the pneumatic transfer conduits; the baskets being of 2 types:
A) for collecting and transporting the tobacco leaves (figure 3.2);
B) for collecting, transporting and placing the leaves within them in order to be dried (figure 4.2).

## Patentansprüche

1. Maschine zum Abschneiden von Tabakblättern mit Stammhalterung für Pflanzen des Östlichen Typs zum Ernten und Sammeln der Blätter in Sammeldrahtkörben mit pneumatischer Beförderung, umfassend:
einen Mechanismus zur Einstellung der Abschneidehöhe und zur parallelen Anordnung zwischen Abschneideebene und dem Boden (Figur 3.5, 3.6, 3.7);
Drehwellen mit elastischen Flossen, die die Blätter öffnen, um ihr Abschneiden zu erleichtern (Figur 2.H-J);
einen Abschneidemechanismus, der eine Drehwelle mit flexiblen geradlinigen Kunststoffteilen mit derselben Schneidrichtung wie die Bewegungsrichtung des Fahrzeugs, sowie mit biegsamen geradlinigen Kunststoffteilen mit einer Schneidrichtung, die senkrecht zur Bewegungsrichtung des Fahrzeugs ist, aufweist (Figur 3, Figur 2);
Drehwellen (Figur 1.5, Figur 5.3) mit elastischen Flossen, die die Blätter zu den pneumatischen Übertragungsleitungen leiten;
pneumatische Übertragungsleitungen, die die abgeschnittenen Blätter zu den Sammelkörben leiten (Figur 1.2, Figur 3.1, Figur 4.1);
Drahtkörbe, worin die abgeschnittenen Blätter gesammelt werden (Figur 1.6, Figur 3.2, Figur 4.2);
ein Fahrzeug, auf dem diese Mechanismen montiert sind und das die Energie zum Bewegen und Funktionieren der Teile der Maschine bereitstellt (Figur 3, Figur 4),
einen Mechanismus zur Stammhalterung der Pflanze während des Abschneidens der Blätter, der vier horizontale Bänder, zwei auf jeder Seite, aufweist.

2. Maschine zum Abschneiden von Tabakblättern nach Anspruch 1, **gekennzeichnet durch** den Mechanismus zur Einstellung der Abschneidehöhe und zur parallelen Anordnung zwischen Abschneideebene und dem Boden, umfassend:
A) Hydraulikzylinder (Figur 3.6, 4.6, 6.1), die die Ausleger, auf denen die die genannten Mechanismen tragenden Basen angeordnet sind (Figur 3.3, 4.3, 6.6), aufwärts oder abwärts bewegen (Figur 3.5, 4.5, 6.2) und die somit die Abschneidehöhe einstellen;
B) einen an einer der Basen angebrachten Winkelsensor (Figur 1.9), der die Neigungsänderung der Basen erfasst;
C) einen Motor (Figur 3.8, 4.8, 6.4), der Anleitungen zur Drehung der Schraube (Figur 3.7, 4.7, 6.3) vom Sensor empfängt, die an einem Ausleger (Figur 3.9, 4.9, 6.5) an der Oberseite der Basen angelenkt ist; diese geeignete Schraubendrehung bewegt den Ausleger, wodurch die Neigung der Basen modifiziert wird, sodass diese immer parallel zum Boden gehalten werden.

3. Maschine zum Abschneiden von Tabakblättern nach Anspruch 1 oder Anspruch 2, **gekennzeichnet durch** die mechanische Sammlung der abgeschnittenen Blätter und deren Übertragung zu den Sammelkörben, die mittels eines Mechanismus erfolgt, der aus zwei Drehwellen mit elastischen Flossen besteht, welche sich unterhalb der Abschneidevorrichtung und auf beiden Seiten des Stammes der Pflanze befinden und welche die abgeschnittenen Blätter zur Einlassöffnung (Figur 1.8) der pneumatischen Übertragungsleitungen führen (Figur 1.2, Figur 3.1, Figur 4.1);
der Mechanismus des Anspruchs 3 ist ferner **durch** zwei pneumatische Übertragungsleitungen gekennzeichnet, die die Blätter zu den Sammelkörben führen (Figur 1.6, Figur 3.2, Figur 4.2); dies geschieht **durch** die Kraft der von einem Gebläse erzeugte Luft (Figur 1.1), welches am Anfang jeder Übertragungsleitung angeordnet ist und eine Saugwirkung an der Blatteinlassöffnung (Figur 1.8) erzeugt, wodurch die abgeschnittenen Blätter in die Leitung gezogen werden und dann sie in Richtung der Körbe geschoben werden.

4. Maschine zum Abschneiden von Tabakblättern nach einem der Ansprüche 1 bis 3, **gekennzeichnet durch** die Sammlung der abgeschnittenen Blätter in Sammeldrahtkörben, die am Ausgang der pneumatischen Übertragungsleitungen angebracht sind; wobei die Körbe von 2 Arten sind:
A) zum Sammeln und Transportieren der Tabakblätter (Figur 3.2);
B) zum Sammeln, Transportieren und Platzieren der Blätter innerhalb dieser, damit sie getrocknet werden (Figur 4.2).

## Revendications

1. Machine à couper des feuilles de tabac avec tige de maintien pour des plantes de type oriental pour la récolte et la collecte des feuilles dans des paniers de collecte à manilles avec transport pneumatique, comprenant:
un mécanisme de réglage de la hauteur de coupe et de mise en parallèle du plan de coupe avec le sol (figure 3.5, 3.6, 3.7)_{.}
arbres rotatifs avec ailettes élastiques ouvrant les feuilles, facilitant leur coupe (figure 2.H-J)
un mécanisme de coupe comprenant un arbre rotatif avec des pièces rectilignes flexibles en plastique au même sens de coupe que le sens de déplacement du véhicule, ainsi qu'avec des pièces rectilignes flexibles en plastique au sens de coupe perpendiculaire au sens de déplacement du véhicle (figure 3, figure 2)'
arbres rotatifs (figure 1.5, figure 5.3) avec ailettes élastiques dirigeant les feuilles vers les conduits de transfert pneumatique
conduits de transfert pneumatique, dirigeant les feuilles coupées vers les paniers de collecte (figure 1.2. figure 3.1, figure 4.1)
paniers à mailles, dans lesquels les feuilles coupées sont collectées (figure 1.6, figure 3.2, figure 4.2)
un véhicule sur lequel ces mécanismes sont montés fournissant l'énergie pour le déplacement et le fonctionnement des pièces de la machine (figure 3, figure 4),
un mécanisme pour maintenir la tige de la plante pendant la coupe des feuilles comprenant quatre courroies horizontales, deux de chaque côté.

2. Machine pour couper des feuilles de tabac selon la Revendication 1, **caractérisée par** le mécanisme de réglage de la hauteur de coupe et la mise en parallèle du plan de coupe avec le sol comprenant:
A) des vérins hydrauliques (figure 3.6, 4.6, 6.1) déplaçant vers le haut ou vers le bas les cantilevers (figure 3.5, 4.5, 6.2) sur lesquels reposent les bases (figure 3.3, 4.3, 6.6) portant lesdits mécanismes, et ajustant ainsi la hauteur de coupe'
B) un capteur d'angle (figure 1.9) monté sur l'une des bases, détectant le changement d'inclinaison des bases'
C) un moteur (figure 3.8, 4.8, 6.4) recevant des instructions par le capteur afin de faire tourner la vis (figure 3.7, 4.7, 6.3), articulée sur un cantilever (figure 3.9, 4.9, 6.5) au sommet des bases cette rotation appropriée de la vis entraînant le déplacement du cantilever, modifiant l'inclinaison des bases les maintenant toujours parallèles au sol'

3. Machine pour couper des feuilles de tabac selon la revendication 1 ou la revendication 2, **caractérisée par** la collecte mécanique des feuilles coupées et leur transfert vers les paniers de collecte, entraînée par un mécanisme, constitué de deux arbres rotatifs avec ailettes élastiques, disposés sous le dispositif de coupe et de chaque côté du tronc de la plante et conduisant les feuilles coupées vers l' orifice d'entrée (figure 1.8) des conduits pneumatiques de transfert (figure 1.2, figure 3.1. figure 4.1)
le mécanisme selon la Revendication 3, étant aussi **caractérisé par** deux conduits de transfert pneumatique entraînant les feuilles vers les paniers de collecte (figure 1.6, figure 3.2, figure 4.2) ceci étant accompli par la force de l'air produit par un ventilateur (figure 1.1) placé au début de chaque conduit de transfert et créant une aspiration à l'orifice d'entrée des feuilles (figure 1.8), tirant les feuilles coupées à l'intérieur du conduit et les poussant par la suite vers les paniers

4. Machine pour couper des feuilles de tabac selon une des revendications 1 à 3, **caractérisée par** la collecte des feuilles coupées dans des paniers de collecte à mailles, montés sur la sortie des conduits de transfert pneumatique' les paniers étant de 2 types:
A) pour la collecte et le transport des feuilles de tabac (figure 3.2)'
B) pour la collecte, le transport et le placement des feuilles à l'intérieur de ceux-ci en vue de leur séchage (figure 4.2).
